# EUROPEAN PATENT APPLICATION

(11) **EP 4 566 916 A1**
(43) Date of publication of application: **11.06.2025**
(21) Application number: 23849730.9
(22) Date of filing: 24.05.2023
(51) Int. Cl.: B62D 3/12, F16H 19/04

(54) **RACK GUIDE DEVICE AND STEERING DEVICE**

(30) Priority: 02.08.2022 JP 2022123337
(71) Applicant: NSK Steering & Control, Inc., Tokyo, 141-0032 (JP)
(72) Inventor: NARITA, Noritomo, Maebashi-shi, Gunma 371-8527 (JP)
(74) Representative: SSM Sandmair
(86) International application number: PCT/JP2023/019330
(87) International publication number: WO 2024/029168

(57) **Abstract**

A rack guide device includes: a housing wall having an internal space extending in an orthogonal direction, a first opening that opens toward a rack bar, and a second opening that opens from the internal space in a direction opposite to the rack bar; an adjustment cover that closes the second opening; a pressure pad that abuts on the rack bar from the first opening; and a coil spring and an O-ring disposed between the adjustment cover and the pressure pad. One of the adjustment cover and the pressure pad has a facing surface facing the other of the adjustment cover and the pressure pad. An annular groove is provided in the facing surface. An inner surface of the annular groove has an inner circumferential surface and an outer circumferential surface facing each other. The annular groove includes a narrow groove in which a groove width between the inner circumferential surface and the outer circumferential surface is smaller than a cross-sectional diameter of the O-ring before being assembled, and a wide groove in which a groove width is larger than the cross-sectional diameter of the O-ring before being assembled.

## Description

### Field

The present disclosure relates to a rack guide device and a steering device.

### Background

Examples of a type of a steering device mounted on a vehicle include a rack-and-pinion type. In addition, the rack-and-pinion type steering device includes a rack guide device that presses a rack bar toward a pinion in order to maintain meshing between the rack bar and the pinion.

Specifically, the rack guide device includes a housing wall, an adjustment cover, a pressure pad, and a coil spring. The housing wall has an internal space extending in a direction orthogonal to the rack bar, a first opening that opens from the internal space toward the rack bar, and a second opening that opens in a direction opposite to the rack bar. The adjustment cover closes the second opening and forms a bottom wall of the internal space. The pressure pad is disposed in the internal space of the housing wall, and abuts on the rack bar from the first opening. The coil spring is disposed between the pressure pad and the adjustment cover in a contracted state, and applies a pressing force to the pressure pad.

As described in Patent Literature 1 below, the adjustment cover has a facing surface that faces the pressure pad. An annular groove is provided in the facing surface. An O-ring is assembled to the annular groove. A part of the O-ring protrudes from the facing surface and abuts on the pressure pad. With this configuration, in a case where the pressure pad moves toward the adjustment cover, the O-ring is deformed, and an impact load input from the pressure pad to the adjustment cover is reduced.

### Citation List

### Patent Literature

Patent Literature 1: US 2021/0146989 A

### Summary

### Technical Problem

By the way, in a case where there is a gap between an inner surface of the annular groove and the O-ring, the O-ring escapes into the gap due to pressing from the pressure pad, and therefore, the pressure pad easily comes into contact with the adjustment cover. Under such circumstances, an O-ring having a crush margin is used, and a filling rate of the O-ring in the annular groove is increased.

On the other hand, in a case where the O-ring having the crush margin is pushed into the annular groove, an escape path of air in the annular groove is blocked by the O-ring, and the air is hardly discharged from the annular groove. Then, the air in the annular groove is gradually compressed by the O-ring, and exerts a significant counterforce against the pushing of the O-ring. From the above, a large load is required for pushing the O-ring, and thus, assembling of the O-ring is not easy.

The present disclosure has been made in view of the above problems, and an object of the present disclosure is to provide a rack guide device and a steering device capable of easily assembling an O-ring to an annular groove.

### Solution to Problem

In order to achieve the above object, a rack guide device according to an aspect of the present disclosure includes: a housing wall that has an internal space extending in a direction orthogonal to a rack bar, a first opening that opens from the internal space toward the rack bar, and a second opening that opens from the internal space in a direction opposite to the rack bar; an adjustment cover that closes the second opening of the housing wall; a pressure pad that is disposed in the internal space and abuts on the rack bar from the first opening; and a coil spring and an O-ring disposed between the adjustment cover and the pressure pad. One of the adjustment cover and the pressure pad has a facing surface facing the other of the adjustment cover and the pressure pad. An annular groove into which the O-ring is assembled is provided in the facing surface. An inner surface of the annular groove has an inner circumferential surface and an outer circumferential surface facing each other. The annular groove includes: a narrow groove in which a groove width between the inner circumferential surface and the outer circumferential surface is smaller than a cross-sectional diameter of the O-ring before being assembled; and a wide groove in which a groove width is larger than the cross-sectional diameter of the O-ring before being assembled.

The O-ring has a crush margin with respect to the narrow groove. Therefore, a filling rate of the O-ring can be increased. When the O-ring is pushed into the annular groove, a gap extending in a depth direction (hereinafter, referred to as a depth-direction gap) is generated between the O-ring and the inner circumferential surface or between the O-ring and the outer circumferential surface in the wide groove. Therefore, air in the annular groove is discharged, and the O-ring can be pushed with a small force. Therefore, it is easy to assemble the O-ring to the annular groove.

As an aspect of the above rack guide device, the outer circumferential surface has: one or more outer circumferential circular arc surfaces extending in a circumferential direction with a predetermined diameter; and one or more outer circumferential bulging surfaces bulging outward in a radial direction from the outer circumferential circular arc surfaces. A diameter of the inner circumferential surface is uniform over a whole circumference. The narrow groove is disposed between the outer circumferential circular arc surfaces and the inner circumferential surface. The wide groove is disposed between the outer circumferential bulging surfaces and the inner circumferential surface.

As a preferable aspect of the above rack guide device, the facing surface has: a first annular surface disposed on an inner circumferential side of the annular groove; and a second annular surface disposed on an outer circumferential side of the annular groove. The first annular surface protrudes toward the other of the adjustment cover and the pressure pad as compared with the second annular surface, and is a collision surface to which a collision load from the other of the adjustment cover and the pressure pad is input.

When the wide groove is provided in the annular groove, a thick portion is reduced and a strength is reduced. In addition, when the outer circumferential bulging surface is provided in the outer circumferential surface of the annular groove, a strength of the second annular surface is reduced. On the other hand, a strength of the first annular surface as a contact surface is maintained. Therefore, even in a case where the outer circumferential bulging surface is provided, durability of one of the adjustment cover and the pressure pad is not impaired.

As an aspect of the above rack guide device, the inner circumferential surface has: one or more inner circumferential circular arc surfaces extending in a circumferential direction with a predetermined diameter; and one or more inner circumferential bulging surfaces bulging inward in a radial direction from the inner circumferential circular arc surfaces. A diameter of the outer circumferential surface is uniform over a whole circumference. The narrow groove is disposed between the outer circumferential surface and the inner circumferential circular arc surfaces. The wide groove is disposed between the outer circumferential surface and the inner circumferential bulging surfaces.

As an aspect of the above rack guide device, the outer circumferential surface has: one or more outer circumferential circular arc surfaces extending in a circumferential direction with a predetermined diameter; and one or more outer circumferential bulging surfaces bulging outward in a radial direction from the outer circumferential circular arc surfaces. The inner circumferential surface has: one or more inner circumferential circular arc surfaces extending in the circumferential direction with a predetermined diameter; and one or more inner circumferential bulging surfaces bulging inward in the radial direction from the inner circumferential circular arc surfaces. The narrow groove is disposed between the outer circumferential circular arc surfaces and the inner circumferential circular arc surfaces. The wide groove is disposed between the outer circumferential bulging surfaces and the inner circumferential circular arc surfaces, between the outer circumferential circular arc surfaces and the inner circumferential bulging surfaces, or between the outer circumferential bulging surfaces and the inner circumferential bulging surfaces.

As an aspect of the above rack guide device, a cross-sectional shape of the O-ring before being assembled may be a circular shape.

As an aspect of the above rack guide device, a cross-sectional shape of the O-ring before being assembled may be a rectangular shape.

As a preferable aspect of the above rack guide device, the inner surface of the annular groove has a bottom surface. The bottom surface includes: a first bottom surface; and a second bottom surface that is farther from the facing surface than the first bottom surface. The bottom surface of the narrow groove is the first bottom surface. The bottom surface of the wide groove is the second bottom surface.

In a process of assembling the O-ring to the annular groove, it is necessary to further push the O-ring after the O-ring abuts on the first bottom surface. Accordingly, a gap at an inner circumferential corner portion between the inner circumferential surface and the bottom surface and a gap at an outer circumferential corner portion between the outer circumferential surface and the bottom surface are reduced, and the filling rate is increased. With the above configuration, a radial gap extending in the radial direction is generated between the O-ring and the second bottom surface at a time point when the O-ring abuts on the first bottom surface. The radial gap is continuous with the depth-direction gap. Therefore, air in the gap at the outer circumferential corner portion and the inner circumferential corner portion moves to the outer circumferential side or the inner circumferential side through the radial gap, and then is discharged to the outside through the depth-direction gap. Therefore, it is easy to further push the O-ring after the O-ring abuts on the first bottom surface.

In order to achieve the above object, a steering device includes: the rack bar extending in a left-right direction of a vehicle; a pinion meshing with the rack bar; and the above rack guide device.

With the steering device described above, air in the annular groove is discharged, and the O-ring can be pushed with a small force. As a result, it is easy to assemble the O-ring to the annular groove.

### Advantageous Effects of Invention

With the guide device and the steering device according to the present disclosure, the O-ring can be easily assembled to the annular groove.

### Brief Description of Drawings

FIG. 1 is a schematic view of an electric power steering device according to a first embodiment.
FIG. 2 is a cross-sectional view of a housing according to the first embodiment taken in a direction parallel to a rack bar.
FIG. 3 is an enlarged view of a rack guide device of FIG. 2.
FIG. 4 is a view of an adjustment cover according to the first embodiment when viewed from a first direction.
FIG. 5 is an enlarged view of a part of FIG. 3.
FIG. 6 is a cross-sectional view taken along arrow VI-VI in FIG. 4.
FIG. 7 is a cross-sectional view taken along arrow VII-VII in FIG. 4.
FIG. 8 is a cross-sectional view illustrating a time point when a second O-ring abuts on a pressure pad in an adjustment cover attachment process.
FIG. 9 is a cross-sectional view illustrating a time point when the second O-ring is pressed against the pressure pad in the adjustment cover attachment process.
FIG. 10 is a cross-sectional view of a state in which attachment of the adjustment cover is completed in the adjustment cover attachment process.
FIG. 11 is a cross-sectional view of a wide groove in a state in which the second O-ring is pressed against the pressure pad.
FIG. 12 is a view of an adjustment cover according to a second embodiment when viewed from a first direction.
FIG. 13 is a view of an adjustment cover according to a third embodiment when viewed from a first direction.
FIG. 14 is a view of an adjustment cover according to a fourth embodiment when viewed from a first direction.
FIG. 15 is a cross-sectional view illustrating a time point when a second O-ring abuts on a first bottom surface in the fourth embodiment, and specifically, is a cross-sectional view taken along arrow XV-XV in FIG. 14. Description of Embodiments

Hereinafter, the present disclosure will be described in detail with reference to the drawings. Note that the present disclosure is not limited to the following embodiments for implementing the invention (hereinafter, referred to as embodiments). In addition, constituent elements in the following embodiments include those that can be easily assumed by those skilled in the art, those that are substantially the same, and those within a socalled equivalent range. Furthermore, the constituent elements disclosed in the following embodiments can be appropriately combined.

### (First Embodiment)

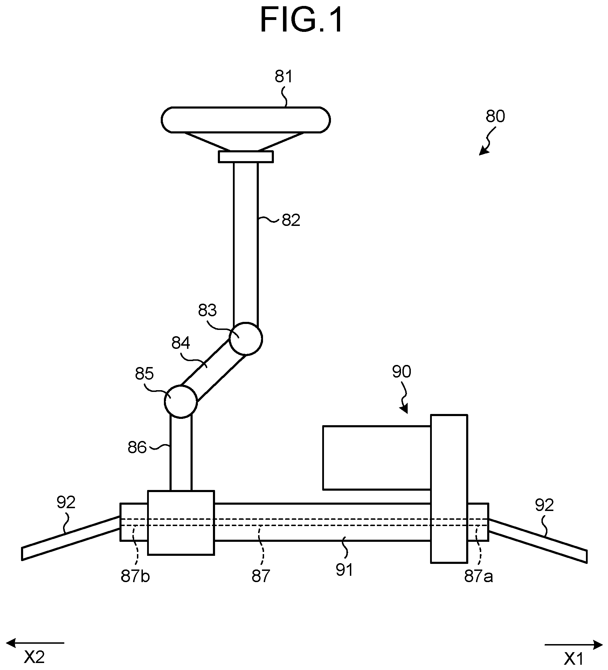

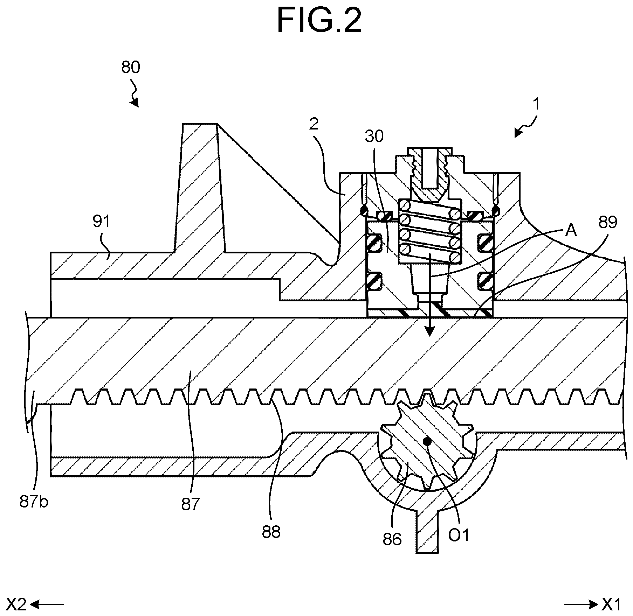

FIG. 1 is a schematic view of an electric power steering device according to a first embodiment. FIG. 2 is a cross-sectional view of a housing according to the first embodiment taken in a direction parallel to a rack bar. An electric power steering device 80 is a device that is mounted on a front portion of a vehicle body of a vehicle and steers wheels. As illustrated in FIG. 1, the electric power steering device 80 includes a steering wheel 81, a steering column shaft 82, a universal joint 83, an intermediate shaft 84, a universal joint 85, a steering pinion 86, a rack bar 87, an assist device 90, a housing 91, and a rack guide device 1.

The steering wheel 81 is connected to the steering column shaft 82. The steering column shaft 82, the intermediate shaft 84, and the steering pinion 86 are connected via the universal joints 83 and 85. As illustrated in FIG. 2, the steering pinion 86 meshes with a first rack 88 of the rack bar 87. The rack bar 87 has a pressed surface 89 on a back side of the first rack 88. The pressed surface 89 is pressed by a pressure pad 30 of the rack guide device 1 (see arrow A in FIG. 2). As a result, the rack bar 87 is pressed toward the steering pinion 86, so that the meshing between the steering pinion 86 and the first rack 88 is maintained.

As illustrated in FIG. 1, the rack bar 87 is supported by the housing 91 so as to be movable in a vehicle width direction (a direction indicated by arrows X1 and X2 in FIGS. 1 and 2) of the vehicle. Both end portions 87a and 87b of the rack bar 87 are connected to the wheels (not illustrated) via tie rods 92. When the steering wheel 81 is operated by a driver, an operation torque thereof is transmitted to the steering pinion 86, and the steering pinion 86 rotates about a rotation axis O1 (see FIG. 2). As a result, the rack bar 87 moves in a left-right direction of the vehicle (see arrows X1 and X2 in FIGS. 1 and 2), and the wheels are steered.

The assist device 90 generates power (assist force) for moving the rack bar 87. Although not particularly illustrated, the assist device 90 includes a control device, a motor, and a power transmission device. The control device receives a detection signal from a torque sensor that detects a torque input to the steering pinion 86. Then, the control device drives the motor and controls the motor to output a desired assist torque. The power transmission device transmits a rotational motion of the motor to the rack bar. The power transmission device includes a worm integrated with an output shaft of the motor, a worm wheel meshing with the worm, and an assist pinion integrally rotating with the worm wheel. The assist pinion meshes with a second rack (not illustrated) provided on the rack bar 87. Therefore, the assist force acts on the rack bar 87 by the driving of the motor.

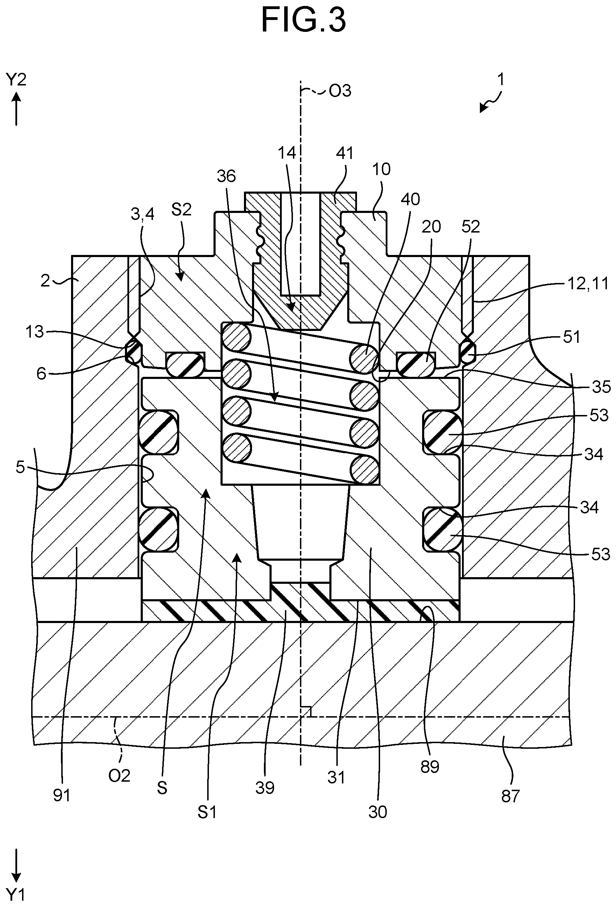

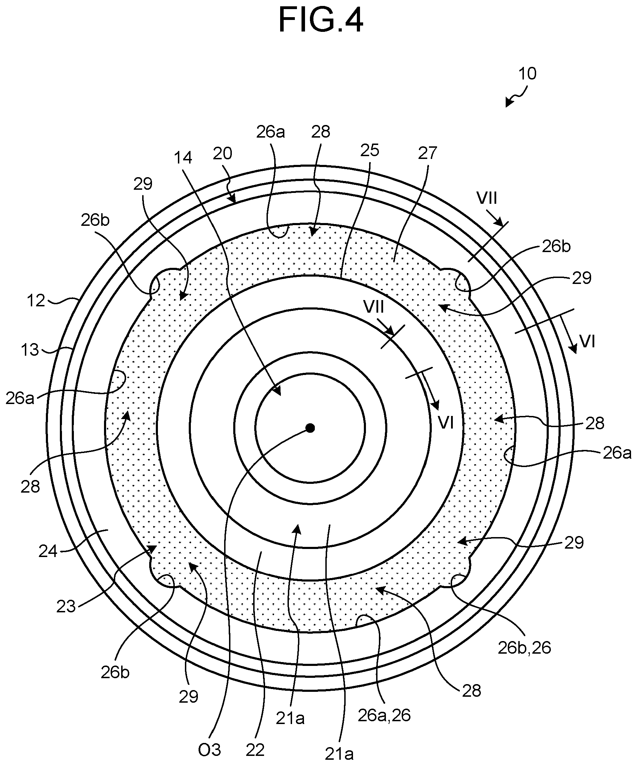

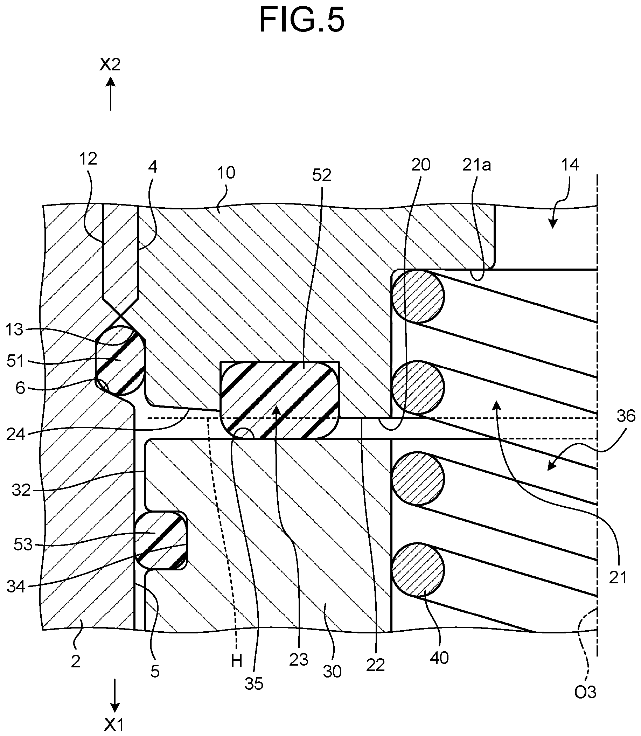

Next, details of the rack guide device 1 will be described. FIG. 3 is an enlarged view of the rack guide device of FIG. 2. FIG. 4 is a view of an adjustment cover according to the first embodiment when viewed from a first direction. FIG. 5 is an enlarged view of a part of FIG. 3. As illustrated in FIG. 3, the rack guide device 1 includes a housing wall 2, an adjustment cover 10, a pressure pad 30, a coil spring 40, and O-rings (a first O-ring 51, a second O-ring 52, and a third O-ring 53).

The housing wall 2 is a cylindrical wall (thick portion) integrally provided in the housing 91. The housing wall 2 has an internal space S and two openings (a first opening S1 and a second opening S2). The internal space S extends along a center line O3. The center line O3 is orthogonal to a center line O2 of the rack bar 87. That is, the internal space S extends in a direction orthogonal to the rack bar 87. One (first opening S1) of the two openings opens toward the pressed surface 89 of the rack bar 87. The other (second opening S2) of the two openings opens in a direction opposite to the rack bar 87.

Hereinafter, a direction parallel to the center line O3 is referred to as an orthogonal direction. In the orthogonal direction, a side on which the first opening S1 is present when viewed from the internal space S is referred to as a first direction Y1. In the orthogonal direction, a side on which the second opening S2 is present when viewed from the internal space S is referred to as a second direction Y2.

A female screw portion 4 and a sliding surface 5 are provided on an inner circumferential surface 3 of the housing wall 2. The female screw portion 4 is provided near the second opening S2. The sliding surface 5 is a cylindrical surface centered on the center line O3, and is provided on the inner circumferential surface 3 from a central portion in the orthogonal direction to an end portion in the first direction Y1. An inner circumferential step surface 6 is provided between the female screw portion 4 and the sliding surface 5.

The adjustment cover 10 is a member that closes the second opening S2 of the housing wall 2, and has a disk shape. A male screw portion 12 is provided on an outer circumferential surface 11 of the adjustment cover 10. The male screw portion 12 is screwed into the female screw portion 4 of the housing wall 2. Thus, the adjustment cover 10 is fixed to the housing wall 2.

An outer circumferential step surface 13 is provided on the outer circumferential surface 11 of the adjustment cover 10 at an end portion in the first direction Y1. The outer circumferential step surface 13 faces the inner circumferential step surface 6. The first O-ring 51 is disposed between the inner circumferential step surface 6 and the outer circumferential step surface 13. As a result, a space between the housing wall 2 and the adjustment cover 10 is sealed. Therefore, grease in the housing 91 hardly flows out of the housing wall 2.

A through-hole 14 penetrating in the orthogonal direction is provided at a central portion of the adjustment cover 10. The through-hole 14 is a hole into which a dial gauge is inserted in a case of measuring a position of the pressure pad 30 in the orthogonal direction. A cap 41 is inserted into the through-hole 14 from the second direction Y2, and the through-hole 14 is sealed. The adjustment cover 10 has a facing surface 20 facing the first direction Y1. The facing surface 20 forms a bottom surface of the internal space S.

As illustrated in FIG. 4, a first housing hole 21, a first annular surface 22, an annular groove 23, and a second annular surface 24 are provided in the facing surface 20 in order from the center line O3 toward the outside in a radial direction. In FIG. 4, dots are added to a range of the annular groove 23 in order to make the annular groove 23 easier to see.

The first housing hole 21 is a recess provided in the facing surface 20. The first housing hole 21 has a cylindrical shape centered on the center line O3. As illustrated in FIG. 5, a part (a portion close to the second direction Y2) of the coil spring 40 is housed in the first housing hole 21. A central portion of a bottom surface 21a of the first housing hole 21 is thinned out by the through-hole 14. Therefore, the bottom surface 21a of the first housing hole 21 is annular (see FIG. 4). An end portion of the coil spring 40 in the second direction Y2 abuts on the bottom surface 21a.

As illustrated in FIG. 4, the first annular surface 22 is an annular (circular) surface disposed between the first housing hole 21 and the annular groove 23. The second annular surface 24 is an annular (circular) surface disposed on a circumferential side of the annular groove 23. As illustrated in FIG. 5, the first annular surface 22 forms a plane perpendicular to the center line O3. The second annular surface 24 is inclined so as to be positioned in the second direction Y2 as the second annular surface 24 extends toward the outside in the radial direction. That is, the second annular surface 24 is a tapered surface. Therefore, the first annular surface 22 is disposed in the first direction Y1 with respect to the second annular surface 24 (see auxiliary line H).

The annular groove 23 is a recess provided in the facing surface 20. The annular groove 23 forms an annular shape (circular shape) around the center line O3. The second O-ring 52 is pushed into the annular groove 23 from the first direction Y1, and the second O-ring 52 is fitted into the annular groove 23. In addition, the second O-ring 52 having a crush margin with respect to the annular groove 23 is used. Therefore, a filling rate of the second O-ring 52 in the annular groove 23 is high. A part of the second O-ring 52 protrudes toward the first direction Y1 from the facing surface 20 (first annular surface 22). Details of the annular groove are described below.

As illustrated in FIG. 3, the pressure pad 30 is a cylindrical component centered on the center line O3. An end portion of the pressure pad 30 in the first direction Y1 protrudes from the first opening S1 into the housing 91. A guide portion 39 made of a resin is provided on an end surface 31 of the pressure pad 30 in the first direction Y1. The guide portion 39 abuts on the pressed surface 89 of the rack bar 87.

An outer circumferential surface 32 of the pressure pad 30 faces the sliding surface 5 of the housing wall **2.** As illustrated in FIG. 5, a minute gap is provided between the outer circumferential surface 32 of the pressure pad 30 and the sliding surface 5 of the housing wall 2. As a result, the pressure pad 30 is supported by the housing wall 2 so as to be slidable in the orthogonal direction.

As illustrated in FIG. 3, two housing grooves 34 are provided in the outer circumferential surface 32 of the pressure pad 30. The housing groove 34 has an annular shape centered on the center line O3. The third O-ring 53 is fitted in the housing groove 34. As a result, it is difficult for the grease in the housing 91 to pass between the sliding surface 5 and the pressure pad 30 and to flow out in the second direction Y2 (outside the housing wall 2).

As illustrated in FIG. 5, the pressure pad 30 has a back surface 35 facing the second direction Y2. The back surface 35 faces the facing surface 20. The back surface 35 is a plane perpendicular to the center line O3. A gap that allows the pressure pad 30 to move in the second direction Y2 is provided between the facing surface 20 and the back surface 35. The second O-ring 52 abuts on the back surface 35.

As illustrated in FIG. 3, a circular second housing hole 36 recessed toward the first direction Y1 is provided at a central portion of the back surface 35. A part (a portion close to the first direction Y1) of the coil spring 40 is housed in the second housing hole 36. An end portion of the coil spring 40 in the first direction Y1 abuts on a bottom surface of the second housing hole 36. In addition, the coil spring 40 is assembled between the adjustment cover 10 and the pressure pad 30 in a state of being contracted in the orthogonal direction. As a result, the pressure pad 30 is pressed toward the first direction Y1 by a restoring force of the coil spring 40.

With the rack guide device 1 according to the first embodiment, in a case where vibration from a road surface is input to the rack bar 87 and the rack bar 87 and the pressure pad 30 move toward the second direction Y2, the back surface 35 of the pressure pad 30 comes into contact with the facing surface 20 (first annular surface 22) of the adjustment cover 10. As a result, a collision load is input to a portion of the adjustment cover 10 where the first annular surface 22 is provided.

In addition, the second O-ring 52 is crushed (deformed) by the movement of the pressure pad 30 in the second direction Y2. Therefore, the collision load input to the first annular surface 22 is reduced. After the back surface 35 comes into contact with the facing surface 20 (first annular surface 22), the pressure pad 30 and the rack bar 87 are pressed toward the first direction Y1 by the restoring force of the coil spring 40. Then, the first rack 88 of the rack bar 87 and the steering pinion 86 mesh with each other.

In addition, the pressure pad 30 may be inclined in the internal space S. That is, a part of an outer circumferential side of the back surface 35 of the pressure pad 30 may be close to the second annular surface 24. However, the second annular surface 24 is a tapered surface. Therefore, the back surface 35 does not come into contact with the second annular surface 24.

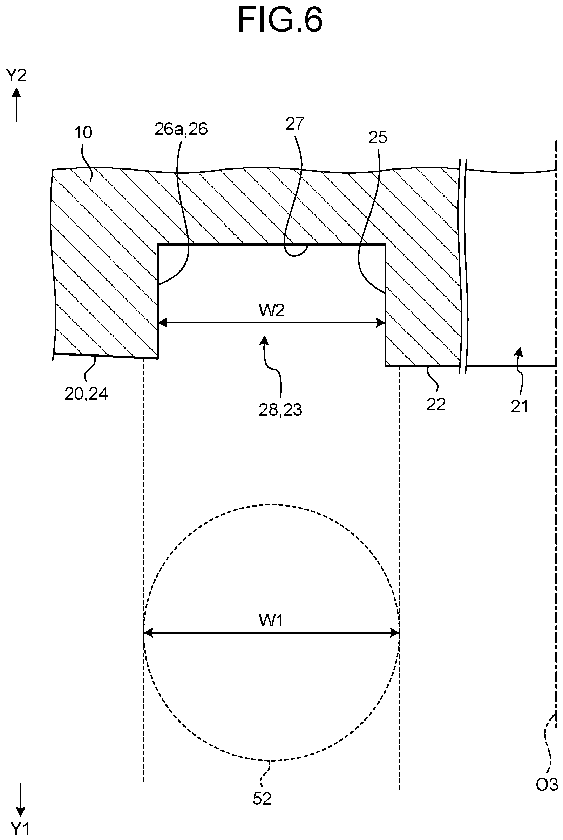

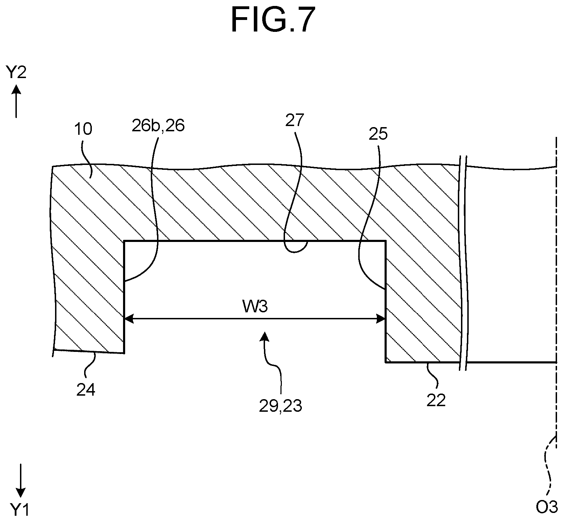

Next, details of the annular groove 23 and the second O-ring 52 will be described. FIG. 6 is a cross-sectional view taken along arrow VI-VI in FIG. 4. FIG. 7 is a cross-sectional view taken along arrow VII-VII in FIG. 4. As illustrated in FIG. 6, an inner surface of the annular groove 23 has an inner circumferential surface 25 and an outer circumferential surface 26 facing each other, and a bottom surface 27 facing the first direction Y1.

The inner circumferential surface 25 is a side surface facing outward in the radial direction. The outer circumferential surface 26 is a side surface facing inward in the radial direction. As illustrated in FIG. 4, the inner circumferential surface 25 has a circular shape centered on the center line O3 when viewed from the first direction Y1. That is, a diameter of the inner circumferential surface 25 is uniform over the whole circumference. On the other hand, the outer circumferential surface 26 has a circular shape centered on the center line O3 as a whole, and a part of the outer circumferential surface 26 bulges outward in the radial direction when viewed from the first direction Y1. That is, the outer circumferential surface 26 has a plurality of outer circumferential circular arc surfaces 26a extending in a circumferential direction with a predetermined diameter and a plurality of outer circumferential bulging surfaces 26b bulging outward in the radial direction from the outer circumferential circular arc surfaces 26a.

A portion disposed between the outer circumferential circular arc surface 26a and the inner circumferential surface 25 forms a narrow groove 28. On the other hand, a portion disposed between the outer circumferential circular arc surface 26a and the inner circumferential surface 25 forms a wide groove 29. That is, the annular groove 23 includes the narrow groove 28 and the wide groove 29 having different groove widths.

In the present embodiment, the outer circumferential bulging surfaces 26b are arranged at intervals of 90°, and a total of four outer circumferential bulging surfaces 26b are provided. The outer circumferential circular arc surface 26a is disposed between two outer circumferential bulging surfaces 26b, and a total of four outer circumferential circular arc surfaces 26a are provided. Therefore, four narrow grooves 28 and four wide grooves 29 are provided. In addition, the bottom surface 27 according to the present embodiment has a uniform distance from the facing surface 20 over the whole circumference.

As illustrated in FIG. 6, the second O-ring 52 before being assembled to the annular groove 23 has a circular cross-sectional shape. A cross-sectional diameter of the second O-ring 52 before being assembled to the annular groove 23 is W1. The groove width of the narrow groove 28 is W2. The groove width W2 is smaller than the cross-sectional diameter W1. Therefore, the second O-ring 52 has a crush margin with respect to the narrow groove 28. As illustrated in FIG. 7, the groove width of the wide groove 29 is W3. The groove width W3 is larger than the cross-sectional diameter W1. Therefore, the second O-ring 52 does not have a crush margin with respect to the wide groove 29.

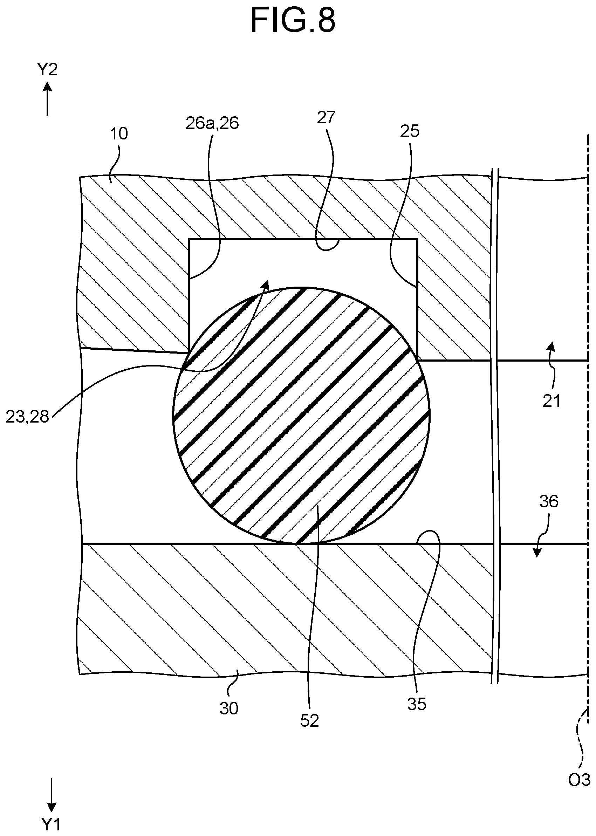

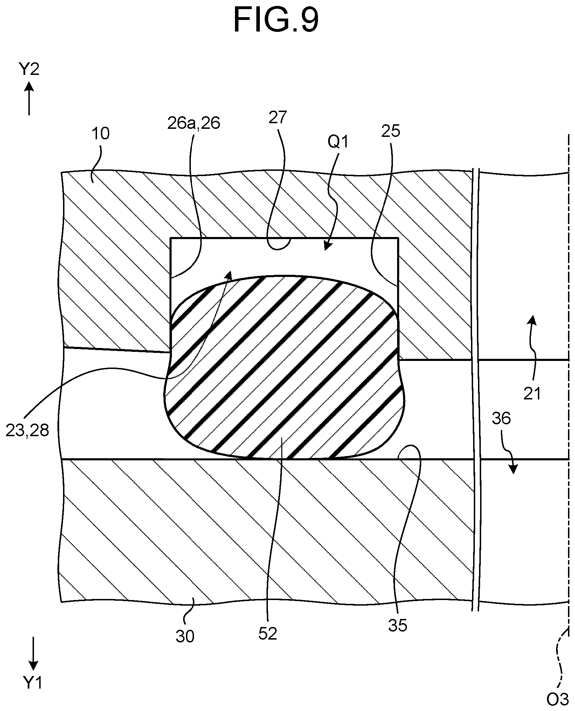

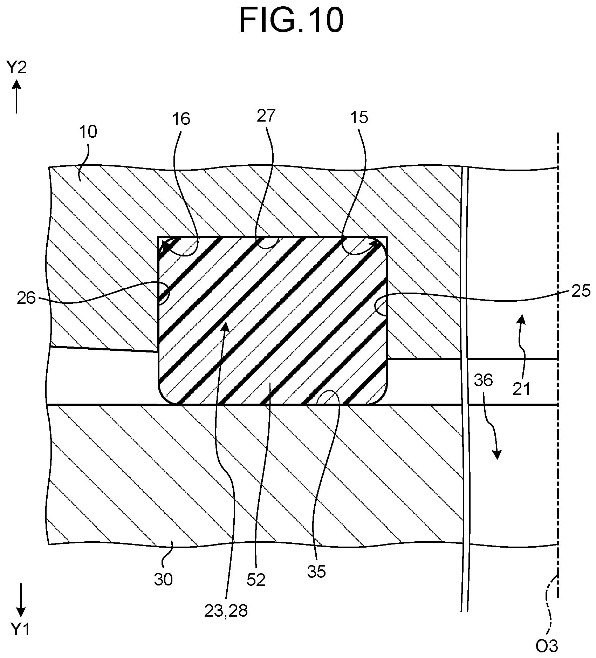

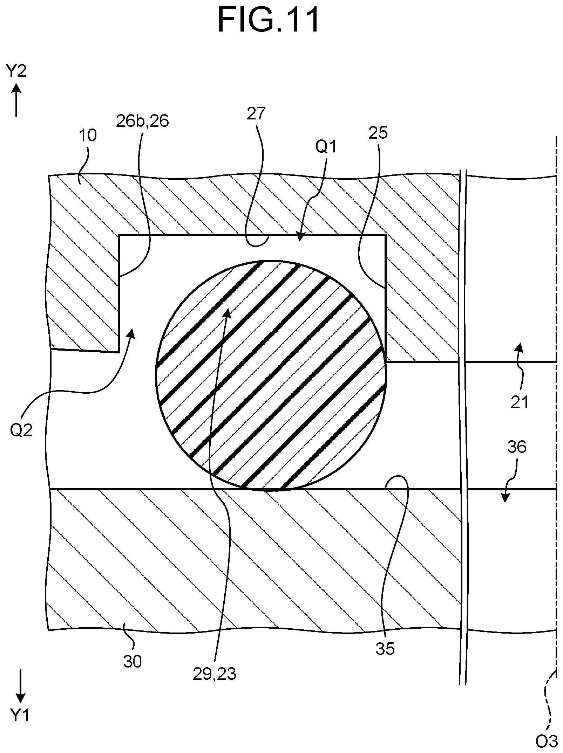

Next, a process of assembling the second O-ring 52 to the annular groove 23 will be described. FIG. 8 is a cross-sectional view illustrating a time point when the second O-ring abuts on the pressure pad in an adjustment cover attachment process. FIG. 9 is a cross-sectional view illustrating a time point when the second O-ring is pressed against the pressure pad in the adjustment cover attachment process. FIG. 10 is a cross-sectional view of a state in which attachment of the adjustment cover is completed in the adjustment cover attachment process. FIG. 11 is a cross-sectional view of the wide groove in a state in which the second O-ring is pressed against the pressure pad.

The assembly of the second O-ring 52 is performed simultaneously with the attachment of the adjustment cover 10 to the housing wall 2. Specifically, a part of the second O-ring 52 is press-fitted into the annular groove 23, and the second O-ring 52 is temporarily fixed to the adjustment cover 10. Next, the adjustment cover 10 is inserted into the second opening S2 of the housing wall 2 while being rotated around the center line O3. As a result, the second O-ring 52 moves in the internal space S of the housing wall 2 toward the first direction Y1. Then, as illustrated in FIG. 8, the second O-ring 52 abuts on the back surface 35 of the pressure pad 30.

Subsequently, when the adjustment cover 10 is rotated, the adjustment cover 10 moves toward the first direction Y1. The second O-ring 52 is pressed toward the second direction Y2 from the back surface 35 and pushed into the annular groove 23. As a result, as illustrated in FIG. 9, the second O-ring 52 is sandwiched between the inner circumferential surface 25 and the outer circumferential circular arc surface 26a in the narrow groove 28. That is, the second O-ring 52 is crushed by receiving a compressive load in the radial direction from the inner circumferential surface 25 and the outer circumferential circular arc surface 26a. Therefore, a cross-sectional shape of the second O-ring 52 is not circular but gradually approximates a shape of the narrow groove 28.

Subsequently, when the adjustment cover 10 is rotated, the second O-ring 52 is pressed against the back surface 35 and abuts on the bottom surface 27. After abutting on the bottom surface 27, the second O-ring 52 is further pressed from the back surface 35, and receives a compressive load in the orthogonal direction from the bottom surface 27 and the back surface 35. As a result, the second O-ring 52 is filled up to the vicinity of an inner circumferential corner portion 15 between the bottom surface 27 and the inner circumferential surface 25 and an outer circumferential corner portion 16 between the bottom surface 27 and the outer circumferential surface 26. Therefore, the second O-ring 52 has a cross-sectional shape following an inner surface of the narrow groove 28. That is, a filling rate of the second O-ring 52 in the narrow groove 28 is high.

Here, as illustrated in FIG. 9, in a case where the second O-ring 52 is sandwiched between the inner circumferential surface 25 and the outer circumferential circular arc surface 26a, a closed space Q1 surrounded by the second O-ring 52, the inner circumferential surface 25, the outer circumferential circular arc surface 26a, and the bottom surface 27 is generated in the narrow groove 28. Assuming that there is no escape hole through which air in the closed space Q1 is discharged, when the second O-ring 52 is further moved toward the second direction Y2 in a state illustrated in FIG. 9, the air in the closed space Q1 is compressed. The compressed air exerts a resistance force to move the second O-ring 52 toward the first direction Y1.

On the other hand, as illustrated in FIG. 11, the second O-ring 52 does not have a tightening margin with respect to the wide groove 29. That is, in the wide groove 29, the second O-ring 52 is not sandwiched between the inner circumferential surface 25 and the outer circumferential bulging surface 26b. Therefore, a gap is generated between the second O-ring 52 and the outer circumferential bulging surface 26b. The gap extends in a depth direction of the annular groove 23 and is thus hereinafter referred to as a depth-direction gap Q2.

Further, the depth-direction gap Q2 extends toward the bottom surface 27 and is continuous with the closed space Q1. Therefore, when the second O-ring 52 is pushed toward the second direction Y2 in a state in which the second O-ring 52 illustrated in FIG. 9 is sandwiched between the inner circumferential surface 25 and the outer circumferential circular arc surface 26a, the air in the closed space Q1 is pushed out toward the depth-direction gap Q2 and discharged to the outside of the annular groove 23. Since the air in the closed space Q1 does not exert a resistance force, the second O-ring 52 can be pushed into the annular groove 23 with a small force.

Although FIG. 11 illustrates a case where the depth-direction gap Q2 is generated between the second O-ring 52 and the outer circumferential bulging surface 26b, the depth-direction gap Q2 according to the present embodiment may be generated between the second O-ring 52 and the inner circumferential surface 25, or may be generated both between the second O-ring 52 and the outer circumferential bulging surface 26b and between the second O-ring 52 and the inner circumferential surface 25.

The process of assembling the second O-ring 52 to the annular groove 23 has been described above. Further, according to the present embodiment, the outer circumferential bulging surface 26b is provided in the facing surface 20, and thus, a part of the thick portion is cut out, and a strength of the adjustment cover 10 is reduced. However, a surface cut out for the outer circumferential bulging surface 26b is not the first annular surface 22 but the second annular surface 24. Therefore, a strength of the first annular surface 22 that is in contact with the pressure pad 30 is maintained.

As described above, the electric power steering device (steering device) 80 according to the first embodiment includes the rack bar 87 extending in the left-right direction of the vehicle, the pinion (steering pinion 86) mashing with the rack bar 87, and the rack guide device 1. The rack guide device 1 includes: the housing wall 2 having the internal space S extending in the direction orthogonal to the rack bar 87, the first opening S1 that opens from the internal space S toward the rack bar 87, and the second opening S2 that opens from the internal space S in the direction opposite to the rack bar 87; the adjustment cover 10 that closes the second opening S2 of the housing wall 2; the pressure pad 30 that is disposed in the internal space S and abuts on the rack bar 87 from the first opening S1; and the coil spring 40 and the O-ring (second O-ring 52) disposed between the adjustment cover 10 and the pressure pad 30. One of the adjustment cover 10 and the pressure pad 30 has the facing surface 20 facing the other of the adjustment cover 10 and the pressure pad 30. The annular groove 23 to which the O-ring (second O-ring 52) is assembled is provided in the facing surface 20. The inner surface of the annular groove 23 has the inner circumferential surface 25 and the outer circumferential surface 26 facing each other. The annular groove 23 includes the narrow groove 28 in which the groove width between the inner circumferential surface 25 and the outer circumferential surface 26 is smaller than the cross-sectional diameter W1 of the O-ring (second O-ring 52) before being assembled, and the wide groove 29 in which the groove width is larger than the cross-sectional diameter W1 of the O-ring (second O-ring 52) before being assembled.

According to the first embodiment, the filling rate of the second O-ring 52 in the narrow groove 28 is high. Therefore, the pressure pad 30 hardly comes into contact with the adjustment cover 10, and generation of a contact sound can be suppressed. When the second O-ring 52 is assembled, the air in the closed space Q1 is discharged from the depth-direction gap Q2. Therefore, the second O-ring 52 can be pushed into the annular groove 23 with a small force. Therefore, it is easy to assemble the second O-ring 52 to the annular groove 23.

The outer circumferential surface 26 of the annular groove 23 according to the first embodiment has (one or) a plurality of outer circumferential circular arc surfaces 26a extending in the circumferential direction with a predetermined diameter, and (one or) a plurality of outer circumferential bulging surfaces 26b bulging outward in the radial direction from the outer circumferential circular arc surfaces 26a. The diameter of the inner circumferential surface 25 is uniform over the whole circumference. The narrow groove 28 is disposed between the outer circumferential circular arc surface 26a and the inner circumferential surface 25. The wide groove 29 is disposed between the outer circumferential bulging surface 26b and the inner circumferential surface 25.

The facing surface 20 according to the first embodiment has the first annular surface 22 disposed on an inner circumferential side of the annular groove 23 and the second annular surface 24 disposed on an outer circumferential side of the annular groove 23. The first annular surface 22 protrudes toward the pressure pad 30 (the other of the adjustment cover 10 and the pressure pad 30) from the second annular surface 24, and is a collision surface to which a collision load from the pressure pad 30 (the other of the adjustment cover 10 and the pressure pad 30) is input.

According to the first embodiment, even when the outer circumferential bulging surface 26b is provided in the facing surface 20, the strength of the first annular surface 22 is maintained. Therefore, durability of the adjustment cover 10 is maintained.

In the first embodiment, the cross-sectional shape of the O-ring (second O-ring 52) before being assembled is circular.

Although the first embodiment has been described above, the present disclosure is not limited to the example described in the first embodiment. In the first embodiment, an example in which the present disclosure is applied to the electric power steering device 80 including the assist device has been described, but the present disclosure may be applied to a steering device that does not include the assist device. In a case where the assist device includes the assist pinion, the present disclosure may be applied to a rack guide device that presses the rack bar 87 toward the assist pinion. Further, in the present embodiment, the cross-sectional shape of the O-ring (second O-ring 52) before being assembled is a circular shape, but in the present disclosure, the cross-sectional shape of the O-ring before being assembled may be a rectangular shape and is not particularly limited.

Further, in the first embodiment, four wide grooves 29 are provided, but in the present disclosure, one wide groove 29 may be provided, and the number of wide grooves 29 is not limited. Further, in the first embodiment, four wide grooves 29 are arranged at equal intervals in the circumferential direction, but may not be arranged at equal intervals in the present disclosure. In addition, the wide groove 29 according to the first embodiment is formed by the bulging outer circumferential surface and the inner circumferential surface, but the present disclosure is not limited thereto. Hereinafter, a wide groove according to another embodiment will be described. In the following description, only differences from the rack guide device 1 according to the first embodiment will be described.

### (Second Embodiment)

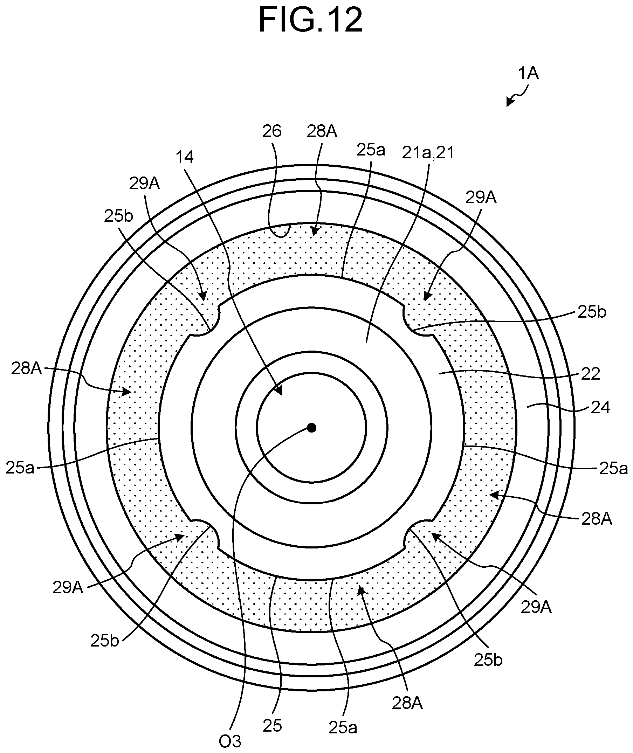

FIG. 12 is a view of an adjustment cover according to a second embodiment when viewed from a first direction. A rack guide device 1A according to the second embodiment is different from that of the first embodiment in that a diameter of an outer circumferential surface 26 of an annular groove 23 is uniform over the whole circumference. In addition, an inner circumferential surface 25 of the annular groove 23 is different from that of the first embodiment in that the inner circumferential surface 25 has four inner circumferential circular arc surfaces 25a extending in a circumferential direction with a predetermined diameter and four inner circumferential bulging surfaces 25b bulging inward in a radial direction from the inner circumferential circular arc surfaces 25a.

Therefore, a narrow groove 28A according to the second embodiment is disposed between the outer circumferential surface 26 and the inner circumferential circular arc surface 25a. A wide groove 29A is disposed between the outer circumferential surface 26 and the inner circumferential bulging surface 25b. According to the second embodiment, when a second O-ring 52 is assembled, a depth-direction gap Q2 is generated between the second O-ring 52 and the outer circumferential surface 26 or between the second O-ring 52, the outer circumferential surface 26, and the inner circumferential bulging surface 25b. Therefore, air in a closed space Q1 is pushed out by the second O-ring 52, flows toward the depth-direction gap Q2, and is discharged from the annular groove 23. Therefore, the second O-ring 52 can be easily assembled to the annular groove 23.

In the second embodiment, tour inner circumferential bulging surfaces 25b and four wide grooves 29A are provided, but in the present disclosure, the number of inner circumferential bulging surfaces 25b and the number of wide grooves 29A may be one and are not limited.

### (Third Embodiment)

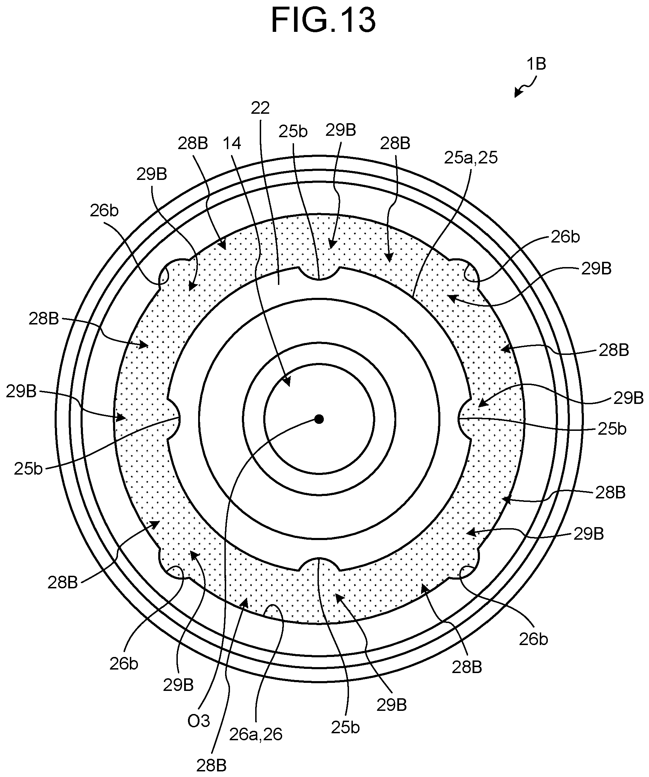

FIG. 13 is a view of an adjustment cover according to a third embodiment when viewed from a first direction. A rack guide device 1B according to the third embodiment is different from that of the first embodiment in terms of an inner circumferential surface 25 of an annular groove 23. Specifically, the inner circumferential surface 25 of the annular groove 23 is different from that of the first embodiment in that the inner circumferential surface 25 has four inner circumferential circular arc surfaces 25a extending in a circumferential direction with a predetermined diameter and four inner circumferential bulging surfaces 25b bulging inward in a radial direction from the inner circumferential circular arc surfaces 25a. The inner circumferential bulging surface 25b is disposed so as to be shifted by 45° with respect to an outer circumferential bulging surface 26b. That is, the inner circumferential bulging surface 25b and the outer circumferential bulging surface 26b are disposed so as to be shifted from each other in the circumferential direction.

Therefore, a narrow groove 28B according to the third embodiment is disposed between an outer circumferential circular arc surface 26a and the inner circumferential circular arc surface 25a. A wide groove 29B is disposed between the outer circumferential circular arc surface 26a and the inner circumferential bulging surface 25b and between the outer circumferential bulging surface 26b and the inner circumferential circular arc surface 25a. As described above, the rack guide device 1B according to the third embodiment includes eight wide grooves 29B. When a second O-ring 52 is assembled, air in a closed space Q1 flows into a depth-direction gap Q2 and is discharged from the annular groove 23. Therefore, the second O-ring 52 can be easily assembled to the annular groove 23.

Although the third embodiment has been described above, in the present disclosure, the inner circumferential bulging surface 25b and the outer circumferential bulging surface 26b may overlap each other in the radial direction. In such a case, the wide groove 29B is disposed between the outer circumferential bulging surface 26b and the inner circumferential bulging surface 25b.

### (Fourth Embodiment)

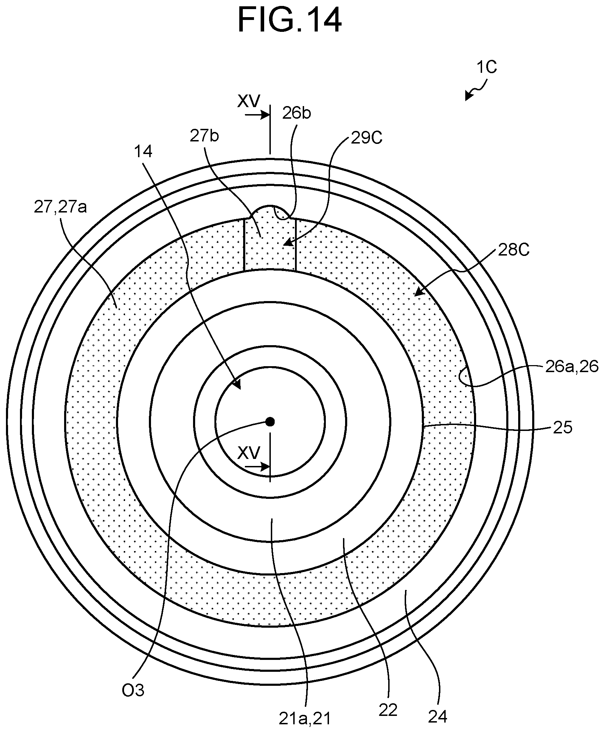

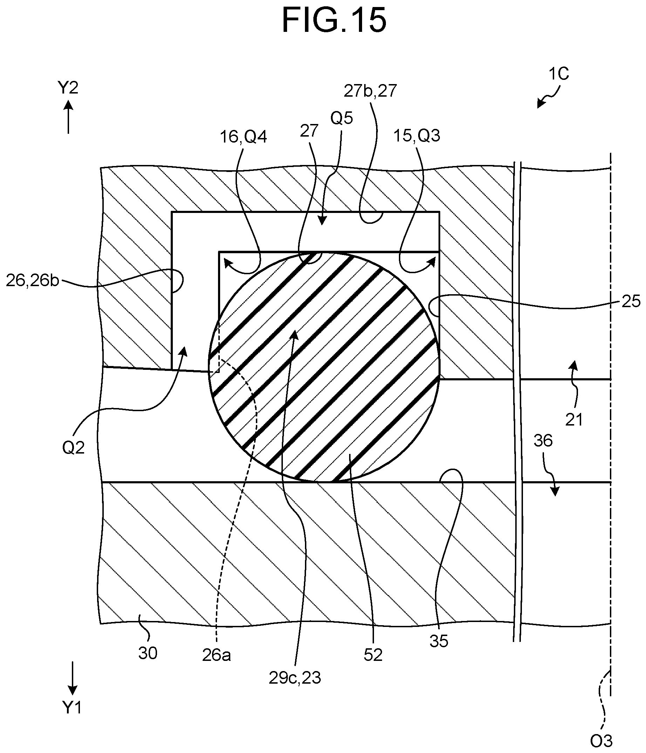

FIG. 14 is a view of an adjustment cover according to a fourth embodiment when viewed from a first direction. FIG. 15 is a cross-sectional view illustrating a time point when a second O-ring abuts on a first bottom surface in the fourth embodiment, and specifically, is a cross-sectional view taken along arrow XV-XV in FIG. 14. As illustrated in FIG. 14, a rack guide device 1C according to the fourth embodiment is different from that of the first embodiment in that the number of outer circumferential bulging surfaces is changed from four to one. In addition, a bottom surface 27 of an annular groove 23 is different from that of the first embodiment in that the bottom surface 27 includes a first bottom surface 27a and a second bottom surface 27b. As illustrated in FIG. 15, the second bottom surface 27b is disposed in a second direction Y2 with respect to the first bottom surface 27a. That is, the second bottom surface 27b is farther from a facing surface 20 than the first bottom surface 27a. The bottom surface 27 of a narrow groove 28 is the first bottom surface 27a. The bottom surface 27 of a wide groove 29 is the second bottom surface 27b.

Next, effects of the rack guide device 1C according to the fourth embodiment will be described. As illustrated in FIG. 15, in a process of assembling a second O-ring 52 to the annular groove 23, the second O-ring 52 is pushed into the annular groove 23 from a first direction Y1. Therefore, as illustrated in FIG. 15, the second O-ring 52 abuts on the first bottom surface 27a. Then, by further pushing the second O-ring 52, the second O-ring 52 is crushed, and a filling rate is increased.

Here, in the narrow groove 28C, an inner circumferential gap Q3 is generated at an inner circumferential corner portion 15, and an outer circumferential gap Q4 is generated at an outer circumferential corner portion 16 at a time point when the second O-ring 52 abuts on the first bottom surface 27a. In the wide groove 29C, the second O-ring 52 does not abut on the second bottom surface 27b. Therefore, a radial gap Q5 extending in a radial direction is generated between the second O-ring 52 and the second bottom surface 27b.

The radial gap Q5 extends from an inner circumferential surface 25 to an outer circumferential bulging surface 26b and is continuous with a depth-direction gap Q2. The inner circumferential gap Q3 of the inner circumferential corner portion 15 and the outer circumferential gap Q4 of the outer circumferential corner portion 16 are continuous in a circumferential direction and form an annular shape. A part of the inner circumferential gap Q3 of the inner circumferential corner portion 15 in the circumferential direction is continuous with the radial gap Q5. A part of the outer circumferential gap Q4 of the outer circumferential corner portion 16 in the circumferential direction is continuous with the depth-direction gap Q2.

Therefore, when the second O-ring 52 is further pushed from the time point when the second O-ring 52 abuts on the first bottom surface 27a, air in the inner circumferential gap Q3 is pushed out toward the radial gap Q5. Then, the air having moved to the radial gap Q5 moves toward the depth-direction gap Q2 and is discharged from the annular groove 23. Air in the outer circumferential gap Q4 is pushed out toward the depth-direction gap Q2 and discharged from the annular groove 23.

Therefore, in a case where the second O-ring 52 is further pushed from the time point when the second O-ring 52 abuts on the first bottom surface 27a, a resistance force of the air acting on the second O-ring 52 is small. Therefore, the second O-ring 52 can be pushed with a small force, and the second O-ring can be easily assembled to the annular groove 23.

Although the fourth embodiment has been described above, the second bottom surface 27b may be applied to the bottom surface 27 of the wide groove 29A disposed between the outer circumferential surface 26 and the inner circumferential bulging surface 25b described in the second embodiment. In the present embodiment, the facing surface 20 having the annular groove 23 is provided in the adjustment cover 10, and the second O-ring 52 is assembled. However, the present disclosure is not limited thereto. That is, the back surface 35 of the pressure pad 30 may be used as the facing surface 20, the second O-ring 52 may be assembled to the annular groove 23 provided in the pressure pad 30.

In addition, the present disclosure may be a combination of the following configurations.
(1) A rack guide device including:
   a housing wall that has an internal space extending in a direction orthogonal to a rack bar, a first opening that opens from the internal space toward the rack bar, and a second opening that opens from the internal space in a direction opposite to the rack bar;
   an adjustment cover that closes the second opening of the housing wall;
   a pressure pad that is disposed in the internal space and abuts on the rack bar from the first opening; and
   a coil spring and an O-ring disposed between the adjustment cover and the pressure pad, wherein
   one of the adjustment cover and the pressure pad has a facing surface facing the other of the adjustment cover and the pressure pad,
   an annular groove into which the O-ring is assembled is provided in the facing surface,
   an inner surface of the annular groove has an inner circumferential surface and an outer circumferential surface facing each other, and
   the annular groove includes:
      a narrow groove in which a groove width between the inner circumferential surface and the outer circumferential surface is smaller than a cross-sectional diameter of the O-ring before being assembled; and
      a wide groove in which a groove width is larger than the cross-sectional diameter of the O-ring before being assembled.
(2) The rack guide device according to (1), in which
   the outer circumferential surface has:
      one or more outer circumferential circular arc surfaces extending in a circumferential direction with a predetermined diameter; and
      one or more outer circumferential bulging surfaces bulging outward in a radial direction from the outer circumferential circular arc surfaces,
   a diameter of the inner circumferential surface is uniform over a whole circumference,
   the narrow groove is disposed between the outer circumferential circular arc surfaces and the inner circumferential surface, and
   the wide groove is disposed between the outer circumferential bulging surfaces and the inner circumferential surface.
(3) The rack guide device according to (2), in which
   the facing surface has:
      a first annular surface disposed on an inner circumferential side of the annular groove; and
      a second annular surface disposed on an outer circumferential side of the annular groove, and
   the first annular surface protrudes toward the other of the adjustment cover and the pressure pad as compared with the second annular surface, and is a collision surface to which a collision load from the other of the adjustment cover and the pressure pad is input.
(4) The rack guide device according to (1), in which
   the inner circumferential surface has:
      one or more inner circumferential circular arc surfaces extending in a circumferential direction with a predetermined diameter; and
      one or more inner circumferential bulging surfaces bulging inward in a radial direction from the inner circumferential circular arc surfaces,
   a diameter of the outer circumferential surface is uniform over a whole circumference,
   the narrow groove is disposed between the outer circumferential surface and the inner circumferential circular arc surfaces, and
   the wide groove is disposed between the outer circumferential surface and the inner circumferential bulging surfaces.
(5) The rack guide device according to (1), in which
   the outer circumferential surface has:
      one or more outer circumferential circular arc surfaces extending in a circumferential direction with a predetermined diameter; and
      one or more outer circumferential bulging surfaces bulging outward in a radial direction from the outer circumferential circular arc surfaces,
   the inner circumferential surface has:
      one or more inner circumferential circular arc surfaces extending in the circumferential direction with a predetermined diameter; and
      one or more inner circumferential bulging surfaces bulging inward in the radial direction from the inner circumferential circular arc surfaces,
   the narrow groove is disposed between the outer circumferential circular arc surfaces and the inner circumferential circular arc surfaces, and
   the wide groove is disposed between the outer circumferential bulging surfaces and the inner circumferential circular arc surfaces, between the outer circumferential circular arc surfaces and the inner circumferential bulging surfaces, or between the outer circumferential bulging surfaces and the inner circumferential bulging surfaces.
(6) The rack guide device according to any one of (1) to (5), in which a cross-sectional shape of the O-ring before being assembled is a circular shape.
(7) The rack guide device according to any one of (1) to (5), in which a cross-sectional shape of the O-ring before being assembled is a rectangular shape.
(8) The rack guide device according to any one of (1) to (7), in which
   the inner surface of the annular groove has a bottom surface,
   the bottom surface includes:
      a first bottom surface; and
      a second bottom surface that is farther from the facing surface than the first bottom surface,
   the bottom surface of the narrow groove is the first bottom surface, and
   the bottom surface of the wide groove is the second bottom surface.
(9) A steering device including:
   a rack bar extending in a left-right direction of a vehicle;
   a pinion meshing with the rack bar; and
   the rack guide device according to any one of (1) to (8) .

### Reference Signs List

1, 1A, 1B, 1C RACK GUIDE DEVICE
2 HOUSING WALL
10 ADJUSTMENT COVER
30 PRESSURE PAD
40 COIL SPRING
52 SECOND O-RING (O-RING)
20 FACING SURFACE
21 FIRST HOUSING HOLE
22 FIRST ANNULAR SURFACE
23 ANNULAR GROOVE
24 SECOND ANNULAR SURFACE
25 INNER CIRCUMFERENTIAL SURFACE
25a INNER CIRCUMFERENTIAL CIRCULAR ARC SURFACE
25b INNER CIRCUMFERENTIAL BULGING SURFACE
26 OUTER CIRCUMFERENTIAL SURFACE
26a OUTER CIRCUMFERENTIAL CIRCULAR ARC SURFACE
26b OUTER CIRCUMFERENTIAL BULGING SURFACE
27 BOTTOM SURFACE
27a FIRST BOTTOM SURFACE
27b SECOND BOTTOM SURFACE
28, 28A, 28B, 28C NARROW GROOVE
29, 29A, 29B, 29C WIDE GROOVE
35 BACK SURFACE
36 SECOND HOUSING HOLE
Q1 CLOSED SPACE
Q2 DEPTH-DIRECTION GAP
Q3 INNER CIRCUMFERENTIAL GAP
Q4 OUTER CIRCUMFERENTIAL GAP
Q5 RADIAL GAP
S INTERNAL SPACE
S1 FIRST OPENING
S2 SECOND OPENING
80 ELECTRIC POWER STEERING DEVICE (STEERING DEVICE)
86 STEERING PINION (PINION)
87 RACK BAR
89 PRESSED SURFACE
91 HOUSING

## Claims

1. A rack guide device comprising:
a housing wall that has an internal space extending in a direction orthogonal to a rack bar, a first opening that opens from the internal space toward the rack bar, and a second opening that opens from the internal space in a direction opposite to the rack bar;
an adjustment cover that closes the second opening of the housing wall;
a pressure pad that is disposed in the internal space and abuts on the rack bar from the first opening; and
a coil spring and an O-ring disposed between the adjustment cover and the pressure pad, wherein
one of the adjustment cover and the pressure pad has a facing surface facing the other of the adjustment cover and the pressure pad,
an annular groove into which the O-ring is assembled is provided in the facing surface,
an inner surface of the annular groove has an inner circumferential surface and an outer circumferential surface facing each other, and
the annular groove includes:
a narrow groove in which a groove width between the inner circumferential surface and the outer circumferential surface is smaller than a cross-sectional diameter of the O-ring before being assembled; and
a wide groove in which a groove width is larger than the cross-sectional diameter of the O-ring before being assembled.

2. The rack guide device according to claim 1, wherein
the outer circumferential surface has:
one or more outer circumferential circular arc surfaces extending in a circumferential direction with a predetermined diameter; and
one or more outer circumferential bulging surfaces bulging outward in a radial direction from the outer circumferential circular arc surfaces,
a diameter of the inner circumferential surface is uniform over a whole circumference,
the narrow groove is disposed between the outer circumferential circular arc surfaces and the inner circumferential surface, and
the wide groove is disposed between the outer circumferential bulging surfaces and the inner circumferential surface.

3. The rack guide device according to claim 2, wherein
the facing surface has:
a first annular surface disposed on an inner circumferential side of the annular groove; and
a second annular surface disposed on an outer circumferential side of the annular groove, and
the first annular surface protrudes toward the other of the adjustment cover and the pressure pad as compared with the second annular surface, and is a collision surface to which a collision load from the other of the adjustment cover and the pressure pad is input.

4. The rack guide device according to claim 1, wherein
the inner circumferential surface has:
one or more inner circumferential circular arc surfaces extending in a circumferential direction with a predetermined diameter; and
one or more inner circumferential bulging surfaces bulging inward in a radial direction from the inner circumferential circular arc surfaces,
a diameter of the outer circumferential surface is uniform over a whole circumference,
the narrow groove is disposed between the outer circumferential surface and the inner circumferential circular arc surfaces, and
the wide groove is disposed between the outer circumferential surface and the inner circumferential bulging surfaces.

5. The rack guide device according to claim 1, wherein
the outer circumferential surface has:
one or more outer circumferential circular arc surfaces extending in a circumferential direction with a predetermined diameter; and
one or more outer circumferential bulging surfaces bulging outward in a radial direction from the outer circumferential circular arc surfaces,
the inner circumferential surface has:
one or more inner circumferential circular arc surfaces extending in the circumferential direction with a predetermined diameter; and
one or more inner circumferential bulging surfaces bulging inward in the radial direction from the inner circumferential circular arc surfaces,
the narrow groove is disposed between the outer circumferential circular arc surfaces and the inner circumferential circular arc surfaces, and
the wide groove is disposed between the outer circumferential bulging surfaces and the inner circumferential circular arc surfaces, between the outer circumferential circular arc surfaces and the inner circumferential bulging surfaces, or between the outer circumferential bulging surfaces and the inner circumferential bulging surfaces.

6. The rack guide device according to claim 1, wherein a cross-sectional shape of the O-ring before being assembled is a circular shape.

7. The rack guide device according to claim 1, wherein a cross-sectional shape of the O-ring before being assembled is a rectangular shape.

8. The rack guide device according to claim 1, wherein
the inner surface of the annular groove has a bottom surface,
the bottom surface includes:
a first bottom surface; and
a second bottom surface that is farther from the facing surface than the first bottom surface,
the bottom surface of the narrow groove is the first bottom surface, and
the bottom surface of the wide groove is the second bottom surface.

9. A steering device comprising:
the rack bar extending in a left-right direction of a vehicle;
a pinion meshing with the rack bar; and
the rack guide device according to any one of claims 1 to 8.
